# EUROPÄISCHE PATENTANMELDUNG

(11) **EP 4 503 502 A1**
(43) Veröffentlichungstag der Anmeldung: **05.02.2025**
(21) Anmeldenummer: 23189496.5
(22) Anmeldetag: 03.08.2023
(51) Int. Cl.: H04L 9/06, H04L 9/08, H04L 9/14

(54) **VERFAHREN ZUR LOKALEN ERZEUGUNG QUANTENSICHERER SCHLÜSSEL IN EINEM NETZWERK**

(71) Anmelder: Deutsche Telekom AG, 53113 Bonn (DE)
(72) Erfinder: GEITZ, Marc, 58089 Hagen (DE); DÖRING, Ronny, 16775 Sonnenberg (DE)
(74) Vertreter: Nern, Peter-Michael

(57) **Zusammenfassung**

Die Erfindung betrifft ein Verfahren zur lokalen Erzeugung von quantensicheren Schlüsseln in einem Netzwerk, bei welchem ein jeweiliger quantensicherer Schlüssel, nämlich ein für eine quantenkryptographisch gesicherte Kommunikation verwendbarer Nutzschlüssel, in zumindest einem, von mehreren über das Netzwerk miteinander verbundenen Netzwerknoten lokal erzeugt wird. Dies geschieht durch Anwendung einer Key Derivation Function KDF auf mindestens eine Zufallszahl oder/und durch deren Verknüpfung mit einem Pre-shared Secret. Die mindestes eine Zufallszahl wird dem vorgenannten, mindestens einen, Schlüssel erzeugenden Netzwerkknoten NRN durch einen der anderen, mithilfe quantenmechanischer Mittel lokal Zufallszahlen generierenden Netzwerkknoten RGN über das Netzwerk zur Verfügung gestellt. Eine jeweilige Zufallszahl wird durch den NRN als Anzahl mehrerer Teilsequenzen empfangen, welche von dem RGN nach einem diese Zufallszahl umfassenden und deren spätere Rekonstruktion ermöglichenden polynomialen Schema PS gebildet und an den Netzwercknoten NRN über dieselbe Anzahl vollständig disjunkter Netzwerkpfade redundant übertragen werden, wobei jede Teilsequenz über einen anderen Netzwerkpfad übertragen wird.

## Beschreibung

Die Erfindung betrifft ein Verfahren zur lokalen Erzeugung von quantensicheren Schlüsseln in einem Netzwerk. Sie bezieht sich auf die Erzeugung kryptographischer Schlüssel, welche als Nutzschlüssel für eine quantenkryptographisch gesicherte Kommunikation verwendbar sind. Letzteres bedeutet, dass diese Schlüssel zur Verschlüsselung von Daten auf der Anwendungsebene und/oder zur Absicherung der Netzkommunikation durch Absicherung der in einem Kommunikationsnetz zur Übertragung von Daten verwendeten Kommunikationskanäle, Übertragungsverfahren und Steuersignale verwendbar sind. Die Absicherung soll dabei jeweils der Art sein, dass sie auch künftig zu erwartenden Angriffen unter Einsatz von Quantencomputern standhält.

Im Zusammenhang mit dem im Vordergrund stehenden Aspekt der Erzeugung von Schlüsseln, welche zur Datenverschlüsselung auf der Anwendungsebene (im OSI-Schichtenmodell) und/oder zur Absicherung der Netzkommunikation in einem Kommunikationsnetz verwendet werden, dient dabei die Bezeichnung entsprechender Schlüssel als "Nutzschlüssel" deren Unterscheidung von anderen, gegebenenfalls zu ihrer Erzeugung und/oder zur Übertragung von Daten, wie Zufallszahlen, während des Erzeugungsprozesses verwendeten Schlüsseln. Letztlich handelt es sich bei Zufallszahlen im Grunde auch um Schlüssel, nämlich um Zeichenketten, die - eine entsprechende Entropie vorausgesetzt - selbst auch zur Verschlüsselung eingesetzt werden können.

Der Absicherung der Infrastruktur von Kommunikationsnetzen sowie der darin übertragenen Daten kommt eine sehr große Bedeutung zu. Hierbei gilt es insbesondere, eine ungehinderte Übertragung der Daten zu ermöglichen sowie ihre unbefugte Kenntnisnahme durch Dritte (Angreifer) und ihre Manipulation zu verhindern. Eine insoweit gesicherte Datenübertragung ist vor dem Hintergrund der zunehmenden Digitalisierung und dem damit zusammenhängenden, ständig steigenden Informationsaustausch über Kommunikationsnetze für nahezu alle Lebensbereiche von Bedeutung. Dies gilt nicht nur in Bezug auf ohnehin als sensibel angesehene Bereiche, wie Militär, nachrichtendienstliche Tätigkeiten und Politik, sowie im Hinblick auf die Sicherstellung störungsfreier wirtschaftlicher Prozesse, hinsichtlich der Sicherstellung der allgemeinen Energieversorgung und der Absicherung finanzieller Transaktionen, sondern auch im Hinblick auf den Schutz persönlicher Daten, wie beispielsweise von Gesundheitsdaten einzelner Personen.

Seit längerem ist es daher bekannt und gebräuchlich, die über Netzwerke, einschließlich des Internets, erfolgende Kommunikation sowie auch die Netzinfrastruktur selbst durch den Einsatz kryptographischer Verfahren abzusichern. Zu diesem Zweck ist eine Vielzahl, teilweiser hochkomplexer kryptographischer Verfahren entwickelt worden, von denen einige nach derzeitigem Stand als sicher, also als nicht zu brechen geltende Verfahren in einem sehr breiten Umfang eingesetzt werden. Allerdings könnte die sich derzeit vollziehende Beschleunigung der Entwicklung von Quantencomputern in absehbarer Zeit dazu führen, dass diese Verfahren nicht mehr als sicher gelten können, da sie im Falle eines Angriffs mit Quantencomputern möglicherweise in sehr kurzer Zeit gebrochen werden können.

Im Hinblick darauf, dass viele Einrichtungen der technischen Infrastruktur, wie unter anderem auch Netzwerkeinrichtungen von Kommunikationsnetzen, sowie bei der Verwendung dieser Einrichtungen genutzte Verfahren typischerweise über lange Zeiträume im Einsatz sind, gilt es daher, diesen Entwicklungen bereits jetzt Rechnung zu tragen. Ein vor diesem Hintergrund entwickeltes kryptographisches Verfahren ist die Quantum Key Distribution QKD, welche ihrerseits ebenfalls quantenmechanische Mittel für die Schlüsselerzeugung und den Schlüsselaustausch nutzt. Die QKD selbst ist, wie es die Bezeichnung angibt, ein Schlüsselverteilungsverfahren, mittels welchem kryptographische Schlüssel für eine symmetrische Verschlüsselung verteilt werden, wobei die Verteilung der Schlüssel mit dem Prozess ihrer Erzeugung einhergeht. Sie löst dabei ein grundsätzliches Problem symmetrischer Verschlüsselungsverfahren, welches darin besteht, einen an mindestens zwei voneinander entfernten Orten für die symmetrische Verschlüsselung verwendeten identischen Schlüssel an diesen mindestens zwei Orten verfügbar zu machen und dabei sicherzustellen, dass dieser Schlüssel nicht kompromittiert wird. Gelöst wird dieses Problem dadurch, dass ein jeweiliger Schlüssel an den mindestens zwei, ihn später für eine symmetrische Verschlüsselung nutzenden Orten im Grunde zeitgleich erzeugt wird.

Jedoch stellt die QKD vergleichsweise hohe technische Anforderungen, so dass die hierfür erforderlichen Systeme recht teuer sind. Daher werden gegenwärtig neu entwickelte kryptographische Verfahren validiert, welche selbst ohne quantenmechanische Mittel auskommen, aber dennoch Angriffen mit quantenmechanischen Mitteln widerstehen können sollen. Die entsprechenden Verfahren werden unter dem Oberbegriff der Post-Quantum Cryptography PQC zusammengefasst. Es handelt sich hierbei um asymmetrische Verschlüsselungsverfahren. Derartige Verschlüsselungsverfahren können unter Einsatz eines Key Encapsulation Mechanismus KEM auch dazu genutzt werden, einen an einem ersten Ort mit quantenmechanischen Mitteln, wie beispielsweise einem QRNG (Quantum Random Number Generator) erzeugten, als quantensicher anzusehenden Schlüssel zum Zweck einer späteren symmetrischen Verschlüsselung an einen anderen Ort zu übertragen.

Dieses Prinzip lässt sich ferner dahingehend nutzen, an einem ersten Ort beispielsweise mittels eines QRNG einen quantensicheren Schlüssel, respektive eine Zufallszahl, zu erzeugen, die Zufallszahl an einen entfernten zweiten Ort oder auch an mehrere zweite Orte zu übertragen und dann an dem entfernten Ort oder den entfernten Orten auf lokaler Ebene aus der vom ersten Ort, also dem Erzeugungsort, empfangenen Zufallszahl den später für eine symmetrische Verschlüsselung verwendeten Schlüssel (Nutzschlüssel) abzuleiten. Die Ableitung des Nutzschlüssels erfolgt hierbei beispielsweise durch Anwendung einer bestimmten Funktion, einer sogenannten Key Derivation Function KDF auf die empfangene, mittels des QRNG an entfernter Stelle generierte Zufallszahl. Hierbei ergibt sich der Vorteil, dass der Nutzschlüssel, sofern gewünscht, auch der die zu seiner Ableitung genutzte Zufallszahl mithilfe quantenmechanischer Mittel generierenden Instanz an dem ersten Ort nicht bekannt ist. Ein entsprechender Lösungsansatz wird beispielsweise in der EP 4 213 440 A1 beschrieben.

Der zuvor beschriebene Ansatz bietet wiederum die Möglichkeit, einen Service zu etablieren, der als Key as a Service (KaaS) bezeichnet werden kann. Hierbei werden durch eine diesen Service erbringende Instanz fortwährend Schlüssel (Zufallszahlen) mithilfe quantenmechanischer Mittel erzeugt und an diesen Service nutzende Abnehmer, beispielsweise über ein Netzwerk mit der ersten Instanz verbundene, von dieser entfernte Netzwerkknoten, übertragen. Diese Netzwerkknoten leiten dann ihrerseits lokal aus diesen Zufallszahlen finale Schlüssel ab, das heißt später von ihnen verwendbare Nutzschlüssel. Im Zusammenhang damit gilt es zur Erhöhung der Sicherheit zu gewährleisten, dass die an dem ersten Ort mithilfe quantenmechanischer Mittel erzeugten Zufallszahlen bei ihrer Übertragung an die hieraus die Nutzschlüssel ableitenden Instanzen nicht bekannt, respektive kompromittiert werden.

Aufgabe der Erfindung ist es daher, ein Verfahren bereitzustellen, welches eine lokale Erzeugung quantensicherer Schlüssel (Nutzschlüssel) in einem Netzwerk ermöglicht und hierbei gleichzeitig eine hohe Sicherheit für die Übertragung von Zufallszahlen gewährleistet, welche mithilfe quantenmechanischer Mittel erzeugt werden und nach ihrer Übertragung über das Netzwerk anderenorts zur Ableitung der quantensicheren Nutzschlüssel verwendet werden.

Die Aufgabe wird durch ein Verfahren mit den Merkmalen des Patentanspruchs 1 gelöst. Vorteilhafte Aus- und Weiterbildungen des Verfahrens sind durch die Unteransprüche gegeben.

Gemäß dem Titel und der vorstehend formulierten Aufgabe dient das nachfolgend beschriebene Verfahren zur lokalen Erzeugung von quantensicheren Schlüsseln in einem Netzwerk. Ein jeweiliger, hierbei erzeugter quantensicherer Schlüssel ist als Nutzschlüssel insbesondere für eine quantenkryptographisch gesicherte Kommunikation, so beispielsweise für die quantensichere Verschlüsselung von Daten auf der Anwendungsebene und/oder zur Absicherung der zur Übertragung von Daten in einem Netzwerk genutzten Infrastruktur, einschließlich dabei verwendeter Protokolle und Steuerdaten, verwendbar. Ein solcher Nutzschlüssel, das heißt ein jeweiliger quantensicherer Schlüssel, wird zumindest in einem, von mehreren über das Netzwerk miteinander verbundenen Netzwerkknoten lokal erzeugt. Dies geschieht durch Anwendung einer Key Derivation Function KDF auf mindestens eine Zufallszahl oder/und durch deren Verknüpfung mit einem Pre-shared Secret PSK, wobei diese mindestens eine Zufallszahl dem vorgenannten mindestens einen lokal Schlüssel erzeugenden Netzwerkknoten NRN durch einen der anderen, mithilfe quantenmechanischer Mittel Zufallszahlen generierenden Netzwerkknoten RGN über das Netzwerk zur Verfügung gestellt wird.

Bei den Netzwerkknoten RGN und NRN kann es sich in diesem Zusammenhang beispielsweise um Netzwerkeinrichtungen in einem Kommunikationskernnetz, um in ein Netzwerk eingebundene Endeinrichtungen eines Unternehmens oder, im Falle des RGN um einen Server eines Zufallszahlen (im Sinne eines Key as a Service KaaS) zur Verfügung stellenden Dienstleisters, oder, insbesondere Im Falle des NRN, auch um ein telekommunikatives Endgerät eines Nutzers handeln.

Bei der Verknüpfung der mindestens einen Zufallszahl mit dem Pre-shared Secret PSK kann es sich im einfachsten Falle um eine XOR-Verknüpfung (XOR-Multiplikation) der mindestens einen Zufallszahl mit dem PSK handeln. Dieses Pre-shared Secret liegt als (gemeinsames) vorverteiltes Geheimnis in dem mindestens einem NRN und in mindestens einem weiteren Netzwerkknoten des Netzwerks, das heißt in anderen von mehreren NRN und/oder in dem RGN selbst vor. Als KDF wird vorzugsweise eine durch das NIST (National Institut of Standards and Technology) standardisierte Funktion zur Ableitung sicherer kryptographischer Schlüssel verwendet.

Die Netzwerkknoten eines Netzwerks, in welchem das hier beschriebene Verfahren implementiert wird, werden entsprechend den vorstehenden Ausführungen im Zusammenhang mit der Erläuterung dieses Verfahrens in Netzwerkknoten NRN und Netzwerkknoten RGN unterschieden, wobei nachfolgend zur sprachlichen Vereinfachung häufig auch nur die jeweilige Kurzform NRN, respektive RGN, benutzt wird. Entsprechend dem dabei, so auch den Patentansprüchen zugrunde gelegten Verständnis, ist ein RGN ein Netzwerkknoten, welcher Zufallszahlen mithilfe quantenmechanischer Mittel generiert. Dem gegenüber handelt es sich bei einem NRN um einen Netzwerkknoten, welcher von einem RGN generierte Zufallszahlen über das Netzwerk empfängt und aus diesen, wie schon erwähnt, durch Anwendung einer Key Derivation Function KDF oder/und Verknüpfung der jeweiligen mindestens einen Zufallszahl mit einem Pre-shared Secret später zu verwendende quantensichere Nutzschlüssel ableitet.

Dieser sprachlichen Unterscheidung soll nicht die Möglichkeit entgegenstehen, dass auch der RGN selbst aus den von ihm erzeugten Zufallszahlen (quantensicheren Schlüsseln), in identischer Weise wie ein von ihm mit diesen Zufallszahlen versorgter NRN, Nutzschlüssel ableitet, die später zur quantengesicherten Kommunikation zwischen dem RGN und dem betreffenden NRN, das heißt insbesondere auch zur symmetrischen Verschlüsselung zwischen den Netzwercknoten übertragener Daten, verwendet werden. Ebenfalls denkbar ist es jedoch, dass der RGN nur der Ableitung von Nutzschlüsseln dienende Zufallszahlen (quantensichere Schlüssel) mithilfe quantenmechanischer Mittel erzeugt und diese mehreren NRN über das Netzwerk zur Verfügung stellt. Letztere können dann aus den durch sie von dem RGN empfangenen Zufallszahlen identische Nutzschlüssel ableiten, welche von ihnen zur Absicherung ihrer untereinander erfolgenden Kommunikation genutzt werden. Die hierbei entstehenden Nutzschlüssel sind dem RGN selbst in diesem Falle nicht bekannt.

Gemäß dem Verfahren wird die mindestens eine der Ableitung eines Nutzschlüssels dienende Zufallszahl durch den oder die NRN in Form mehrerer Teilsequenzen empfangen, nämlich als eine Anzahl von Teilsequenzen, welche von dem RGN nach einem diese mindestens eine durch ihn generierte Zufallszahl umfassenden und deren spätere Rekonstruktion ermöglichenden polynomialen Schema PS gebildet werden. Die insoweit durch den RGN gebildeten Teilsequenzen der Zufallszahl werden durch den RGN an den oder die NRN über eine ihrer Anzahl (der Anzahl der Teilsequenzen) entsprechende Anzahl vollständig disjunkter Netzwerkpfade redundant übertragen. Dabei wird jede Teilsequenz der mindestens einen Zufallszahl über einen anderen der disjunkten Netzwerkpfade an den jeweiligen NRN übertragen.

Was die bereits mehrfach angesprochenen disjunkten Netzwerkpfade anbelangt, liegen dem folgende Überlegungen zugrunde. Die Mehrzahl aller zwischen dem Netzwerkknoten RGN und dem mindestens einen Nutzschlüssel lokal erzeugenden Netzwerkknoten NRN möglichen Netzverbindungen bezeichnen das im Titel und in den Ansprüchen angesprochene Netzwerk, in welchem die quantensicheren Nutzschlüssel erzeugt werden. Innerhalb dieses Netzwerks können Daten zwischen dem RGN und dem mindestens einen NRN auf unterschiedlichsten Wegen (Netzwerkpfaden) übertragen werden. Es kann sich hierbei um unterschiedliche Netzwerkpfade mit ansonsten gleicher Netzwerktechnik, das heißt ein und derselben Netzwerktechnologie, also beispielsweise um voneinander vollständig unabhängige Wege im Festnetz oder um voneinander vollständig unabhängige Wege im Mobilfunknetz handeln. Es kann sich aber ebenso um voneinander vollständig unabhängige Wege in unterschiedlichen, das heißt disjunkten, mit unterschiedlichen Übertragungsprotokollen und/oder unterschiedlichen Übertragungsmedien arbeitenden Teilnetzen, so beispielsweise einerseits um Wege (Netzwerkpfade) im Festnetz und andere Wege (Netzwerkpfade) im Mobilfunknetz handeln. Über die Möglichkeit einer Übertragung im Festnetz und/oder im Mobilfunknetz hinaus, kommen insoweit auch die Nutzung von satellitengestützten Netzen, von WLANs/WiFi, von durch optische Freiraumübertragung gebildeten Netzen und dergleichen mehr für die Übertragung der Teilsequenzen der mindestens einen Zufallszahl in Betracht.

An dieser Stelle sollen einige bereits schon zuvor eingeführte und/oder nachfolgend gebrauchte Begriffe sowie die für sie im Kontext dieser Beschreibung und der Patentansprüche verwendeten, nicht in jedem Falle allgemein gebräuchlichen Abkürzungen aufgelistet werden. Demnach bezeichnen:

| | |
|---|---|
| - Auth | die Authentizität, |
| - C | einen Kanal (Channel), |
| - DEC | einen Entschlüsselungsvorgang (Decryption), |
| - ENC | einen Verschlüsselungsvorgang (Encryption), |
| - HSM | ein Hardware-Sicherheitsmodul (Hardware Security Module), |
| - K | einen Redundanzparameter, |
| - KEM | ein Schlüsselkapselungsverfahren (Key Encapsulation Mechanism), |
| - KDF | eine Key Derivation Function, nämlich vorzugsweise eine durch das NIST standardisierte Key Derivation Function (Schlüsselableitungsfunktion), |
| - PQC | die Post Quanten Kryptographie (Post Quantum Cryptography), |
| - PS | ein polynomiales Schema, zu dessen Art weitere Ausführungen später erfolgen sollen, |
| - PSK | ein Pre-shared Secret, vorverteiltes Geheimnis (bzw. Pre-shared Key, im Hinblick darauf, dass das Geheimnis letztlich auch ein Schlüssel [Key] ist), |
| - N | die Anzahl (der Teilsequenzen TS), |
| - NRN | einen Schlüssel (Nutzschlüssel) erzeugenden Netzwerkknoten (Number Receiving Node), |
| - QRNG | einen Zufallszahlengenerator mit quantenmechanischen Mitteln (Quantum Random Number Generator), |
| - RGN | einen Zufallszahlen mithilfe quantenmechanischer Mittel generierenden Netzwerkknoten (Randomness Generating Node), |
| - SIG | eine digitale Signatur, |
| - TS | eine Teilsequenz, |

wobei ein NRN einen Nutzschlüssel aus mindestens einer von einem RGN empfangenen Zufallszahl unter Einsatz einer KDF oder/und durch deren Verknüpfung mit einem PSK erzeugt, respektive ableitet.

Die zur Erzeugung eines jeweiligen Nutzschlüssels benötigte, in Form der mithilfe des PS gebildeten Teilsequenzen von einem NRN empfangene mindestens eine Zufallszahl wird durch den RGN vorzugsweise mittels eines Quantum Random Number Generators QRNG erzeugt. Es handelt sich somit bei dieser mindestens einen Zufallszahl um eine mithilfe quantenmechanischer Mittel erzeugte Zufallszahl hoher Entropie. Hierbei kann es entsprechend einer bevorzugten Implementierung des Verfahrens zudem vorgesehen sein, dass die mindestens eine zur Ableitung eines Nutzschlüssels durch einen NRN dienende Zufallszahl, das heißt die durch den RGN erzeugten Zufallszahlen, seitens des RGN mithilfe dafür geeigneter Mittel hinsichtlich der Qualität ihrer Entropie validiert werden. Die Validierung der Zufallszahlen kann beispielsweise durch einen zu dem RGN gehörenden mit den quantenmechanischen Mitteln zur Erzeugung der Zufallszahlen interagierenden klassischen Computer erfolgen, indem dieser deren Entropie mithilfe statistischer Methoden bewertet. Stellt der klassische Computer, zum Beispiel mithilfe statistischer Tests zur Zufälligkeit der erzeugten Zahlen, fest, dass die Zufallszahlen mindestens eine vorgegebene Entropie aufweisen, so bestätigt er sie als valide, was er beispielsweise mittels eines Zertifikats kenntlich macht.

Zur weiteren Erhöhung der Sicherheit können die aus der mindestens einen Zufallszahl mittels des polynomialen Schemas PS gebildeten Teilsequenzen zwischen dem Netzwerkknoten RGN und dem mindestens einen Netzwerkknoten NRN verschlüsselt übertragen werden. Die verschlüsselten Teilsequenzen werden hierbei jeweils zusammen mit einer mittels eines privaten Schlüssels des Netzwerkknotens RGN gebildeten Signatur übertragen, welche es dem mindestens einen Netzwerkknoten NRN durch Anwendung des komplementären öffentlichen Schlüssels des Netzwerkknotens RGN ermöglicht, den die Teilsequenzen aussendenden Netzwerkknoten RGN zu authentifizieren. Dabei kann unmittelbar die jeweilige Teilsequenz oder ein aus ihr gebildeter Hashwert durch den Netzwerkknoten RGN mit seinem privaten Schlüssel signiert werden.

Zur Verschlüsselung der Teilsequenzen können in den zu ihrer Übertragung genutzten disjunkten Netzwerkpfade unterschiedliche Verschlüsselungsverfahren eingesetzt werden. So können beispielsweise zur Verschlüsselung der Teilsequenzen zwei oder mehr unterschiedliche KEM-PQC-Verschlüsselungsverfahren eingesetzt werden.

Darüber hinaus können aber auch die von dem RGN generierten Zufallszahlen selbst vor der Bildung der schließlich über die disjunkten Netzwerkpfade übertragenen Teilsequenzen verschlüsselt werden. Vor der Erzeugung eines Nutzschlüssels in einem die Teilsequenzen einer verschlüsselten Zufallszahl empfangenden Netzwerkknoten NRN, werden in diesem Falle durch den betreffenden NRN zunächst die Teilsequenzen wieder zusammengeführt und die hierbei entstehende Sequenz zum Erhalt der nachfolgend durch Anwendung einer KDF oder/und durch Verknüpfung mit einem PSK weiterzuverarbeitenden Zufallszahl entschlüsselt. Auch hierbei werden aber vorzugsweise außerdem die mittels des PS gebildeten Teilsequenzen verschlüsselt über die disjunkten Kanäle übertragen.

Was das bereits mehrfach angesprochene polynomiale Schema PS zur Bildung getrennt übertragener Teilsequenzen einer Zufallszahl anbelangt, so kann es sich hierbei um das Secret Sharing Scheme SSS nach Adi Shamir (im Weiteren auch verkürzend Secret Sharing) handeln. Innerhalb dieses Schemas handelt es sich bei den Teilsequenzen um Stützstellen eines dem SSS zugrunde liegenden, unter Verwendung der Zufallszahl gebildeten Polynoms. Das heißt, bei den Teilsequenzen handelt es sich nicht um Teilabschnitte einer längeren, die gegebenenfalls verschlüsselte Zufallszahl repräsentierenden Zeichenkette, sondern um Terme des besagten Polynoms. Shamir hat hierbei gezeigt, dass es möglich ist, unter Verwendung einer Lagrange-Interpolation auch aus einem Teil dieser Stützstellen das Geheimnis, vorliegend die jeweilige Zufallszahl, wieder zu rekonstruieren. Dies bedeutet, dass im Grunde mehr Teilsequenzen als erforderlich über die disjunkten Kanäle an den NRN übertragen werden, welcher hieraus die Zufallszahl auch dann rekonstruieren kann, wenn einer der Kanäle möglicherweise gestört, gesperrt, respektive unterbrochen, oder kompromittiert ist und dem NRN somit nur ein Teil der durch den RGN ausgesendeten Teilsequenzen zur Verfügung steht. Das heißt, die Übertragung der Teilsequenzen der mindestens einen Zufallszahl weist eine Redundanz auf.

Wie bereits ausgeführt, wird ein jeweiliger Nutzschlüssel durch einen NRN aus mindestens einer von ihm von dem RGN empfangenen Zufallszahl abgeleitet. Demgemäß kann die Ableitung des jeweiligen Nutzschlüssels auch aus mehreren durch den RGN an einen NRN übermittelten Zufallszahlen erfolgen, wobei hierbei von den beiden zuvor erläuterten Verfahrensvarianten - es werden entweder aus einer generierten Zufallszahl unmittelbar Teilsequenzen mittels des PS erzeugt oder die Zufallszahl wird erst verschlüsselt und aus dem Schiffrat werden dann die Teilsequenzen gebildet - nur eine der Varianten exklusiv oder aber auch eine beliebige Mischung beider zum Einsatz gelangen kann. Dies gilt ungeachtet der Tatsache, dass im Zusammenhang mit dem praktischen Einsatz des Verfahrens typischerweise ein jeweiliger RGN fortwährend Zufallszahlen erzeugen und in Form entsprechender Teilsequenzen aussenden wird und ein jeweiliger NRN vorzugsweise nicht nur einen Nutzschlüssel, sondern eine Vielzahl von Nutzschlüsseln jeweils aus mindestens einer Zufallszahl erzeugen wird. Vorzugsweise werden die von ihm erzeugten Nutzschlüssel durch den jeweiligen NRN zu ihrer späteren Verwendung zusammen mit einem sie eindeutig bezeichnenden, von dem RGN gemeinsam mit der mindestens einen Zufallszahl übermittelten Identifikator (Identifier) in einem Hardware Security Modul (HSM) abgelegt.

Die Verschlüsselung der Teilsequenzen bei deren Übertragung an den mindestens einen NRN sowie die eventuelle Verschlüsselung der Zufallszahl vor der Bildung der Teilsequenzen erfolgt entsprechend (mindestens) einer der nachfolgenden Methoden:
- nach einem Key Encapsulation Mechanismus KEM unter Nutzung eines PQC-Verschlüsselungsverfahrens, vorzugsweise eines beim NIST in der Standardisierung befindlichen PQC KEM Algorithmus, wie zum Beispiel Kyber oder Classic McEliece,
- durch symmetrische Verschlüsselung mit einem über einen mittels Quantum Key Distribution gesicherten Kanal ausgetauschten kryptographischen Schlüssel,
- durch symmetrische Verschlüsselung mit einer Zufallszahl, die unter Verwendung eines Wiretap-Codes nach einem Verfahren der Physical Layer Security PLS zwischen dem mindestens einen, den Nutzschlüssel erzeugenden Netzwerkknoten NRN und dem mindestens einen, mit quantenmechanischen Mitteln ausgestatteten Netzwerkknoten RGN ausgetauscht wird,
- durch symmetrische Verschlüsselung mit einem Pre-Shared Secret PSK, nämlich einem gemeinsam an den mindestens einen NRN und an den mindestens einen, mit quantenmechanischen Mitteln ausgestatteten RGN vorverteilten Geheimnis.

Mit Blick auf die zuvor angesprochenen unterschiedlichen Verschlüsselungsverfahren und Techniken kann es dabei vorgesehen sein, dass die Verschlüsselung der mindestens einen Zufallszahl unter Nutzung eines PQC-Verschlüsselungsverfahrens erfolgt. Hinsichtlich der verschlüsselten Übertragung der mehreren Teilsequenzen einer jeweiligen Zufallszahl kann es beispielsweise dabei auch vorgesehen sein, dass in unterschiedlichen Übertragungspfaden mindestens zwei unterschiedliche KEM-PQC-Verschlüsselungsverfahren eingesetzt werden.

Eine sehr vorteilhafte, weil die Sicherheit weiter erhöhende Möglichkeit der Übertragung der Teilsequenzen der mindestens einen Zufallszahl an den oder die NRN besteht darin, über einem jeweiligen der ihrer Übertragung dienenden disjunkten Netzwerkpfade einen VPN-Tunnel (mit VPN = Virtual Private Network) aufzuspannen. Über den betreffenden Netzwerkpfad übertragene Teilsequenzen werden hierbei unter Nutzung eines durch einen PQC-KEM-Algorithmus und ein PQC-Signaturverfahren gesicherten VPN-Tunnels übertragen. Sofern die Absicherung übertragener Teilsequenzen in zwei oder mehr der disjunkten Netzwerkpfade mithilfe eines VPN-Tunnels erfolgt, werden vorzugsweise in diesen Netzwerkpfaden unterschiedliche PQC-Algorithmen für den VPN-Tunnel eingesetzt.

Nachstehend sollen etwas detaillierter mögliche Abläufe bei der Ausführung des Verfahrens dargestellt werden.

### A. Grundlegender Verfahrensansatz:

Die geheime Botschaft, das heißt eine Zufallszahl, wird in einem Netzwerkknoten RGN mittels eines QRNG generiert und dann durch den RGN validiert. Diese Zufallszahl wird vom RGN nach einem polynomialen Schema PS in verschiedene Teilsequenzen TS aufgeteilt. Die Teilsequenzen werden dann von ihm, vorzugsweise verschlüsselt und signiert über unterschiedliche disjunkte Netzwerkpfade, respektive Kanäle (Channels C), an den Zielort, einen Netzwerkknoten NRN, versendet. Als disjunkte Netzwerkpfade (Channels C) dienen zum Beispiel Glasfasernetze unterschiedlicher Betreiber, Mobilfunknetze konkurrierender Provider, Netze der Satelliten-Telefonie und -Datenkommunikation unterschiedlicher Betreiber sowie gegebenenfalls deren Kombinationen. Der die Teilsequenzen empfangende Netzwerkknoten rekonstruiert aus diesen die mindestens eine Zufallszahl, aus welcher er dann den Nutzschlüssel erzeugt.

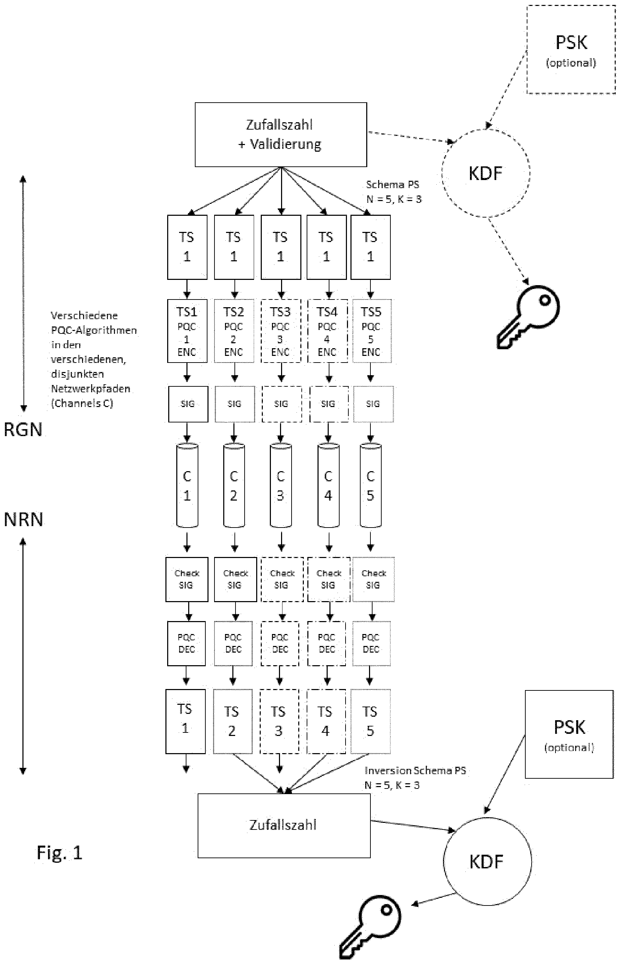

Es werden beispielsweise folgende, durch die Fig. 1 veranschaulichte Schritte ausgeführt:
1. Erzeugung einer Zufallszahl zur Erzeugung eines Nutzschlüssels (beispielweise 256 Bit) durch den QRNG des RGN als Element einer Vielzahl fortwährend durch den RGN erzeugter Zufallszahlen.
2. Validierung der Qualität dieser und anderer durch den RGN erzeugter Zufallszahlen durch statistische Analysen. Unauffällige Zufallszahlen werden weiterverarbeitet.
3. Anwendung eines polynomialen Schemas, wie das Secret Sharing Scheme SSS nach Shamir, unter Nutzung eines die Zufallszahl umfassenden Polynoms. Die Zufallszahl wird dabei in N Teilsequenzen TS unterteilt, wobei der Redundanzgrad K beträgt. Die Anzahl N der Teilsequenzen TS entspricht der Anzahl der disjunkten Netzwerkpfade, die der Datenübermittlung, respektive zur Übertragung der Teilsequenzen TS, zur Verfügung stehen. Der Redundanzgrad K ist "N-1", "N-2", oder ein beliebiges "N-n", abhängig von der Implementierung des SSS. Somit lässt sich eine einfache oder mehrfache redundante Datenübertragung über disjunkte Kanäle sicherstellen.
4. Verschlüsselung der Teilsequenzen TS der Zufallszahl sowie Signierung SIG der Teilsequenzen TS oder eines jeweiligen Hashwertes mit einem PQC-SIG Algorithmus (SIG = Signature) zur Vergewisserung des die Teilsequenzen empfangenden NRN bezüglich der Authentizität des Senders (RGN).
5. Versendung der N Teilsequenzen und Signaturen SIG über die N disjunkten Netzwerkpfade (Channels C) vom Sender (RGN) zum Empfänger (NRN).
6. Der NRN empfängt die Nachrichten und überprüft (Check) die Signaturen SIG des RGN.
7. Sobald K der N Teilsequenzen beim NRN eingetroffen sind, rekonstruiert der NRN nach der Entschlüsselung dieser Teilsequenzen TS aus ihnen die geheime Zufallszahl. Die übrigen Nachrichten werden verworfen.
8. Die rekonstruierte Zufallszahl steht zur weiteren Verwendung beim NRN, nämlich zur lokalen Erzeugung eines Nutzschlüssels unter Anwendung einer KDF und gegebenenfalls (optional) Verknüpfung mit einem PSK zur Verfügung. Dieser und weitere durch den NRN erzeugte Nutzschlüssel stehen für verschiedene Anwendungen zu Verfügung.

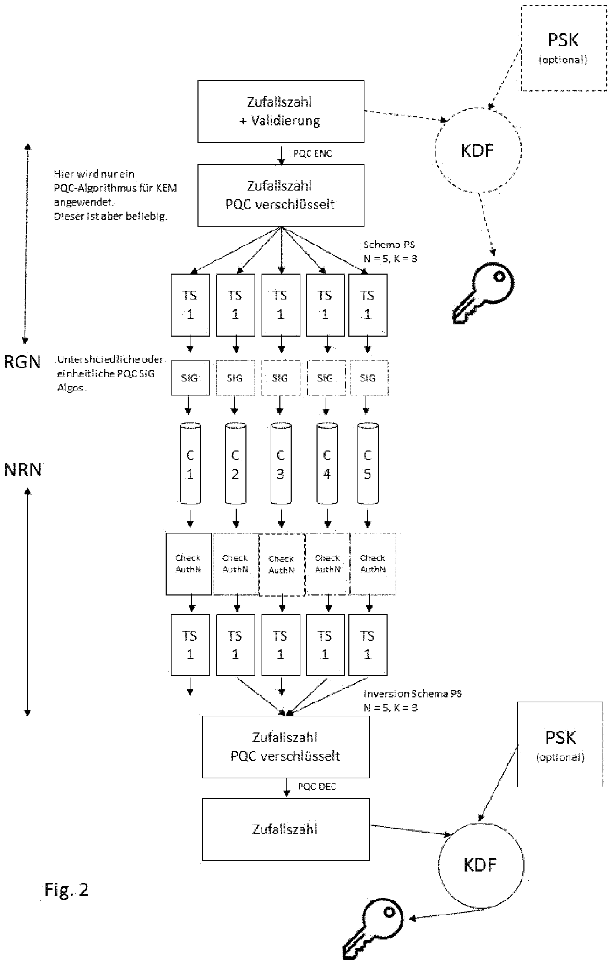

Die in der Fig. 2 dargestellte Abwandlung des zuvor geschilderten Ansatzes ist möglich:
1. Erzeugung einer Zufallszahl zur Erzeugung eines Nutzschlüssels (beispielweise 256 Bit) durch den QRNG des RGN als Element einer Vielzahl fortwährend durch den RGN erzeugter Zufallszahlen.
2. Validierung der Qualität dieser und anderer durch den RGN erzeugter Zufallszahlen durch statistische Analysen. Unauffällige Zufallszahlen werden weiterverarbeitet.
3. Verschlüsselung der validierten Zufallszahl zum Beispiel nach einem beliebigen PQC-Algorithmus.
4. Anwendung eines polynomialen Schemas PS, wie das Secret Sharing Scheme SSS nach Shamir, unter Nutzung eines die verschlüsselte Zufallszahl umfassenden Polynoms. Die verschlüsselte Zufallszahl wird dabei in N Teilsequenzen TS unterteilt, wobei der Redundanzgrad K beträgt. Die Anzahl N der Teilsequenzen TS entspricht der Anzahl der disjunkten Netzwerkpfade, die der Datenübermittlung, respektive zur Übertragung der Teilsequenzen TS, zur Verfügung stehen. Der Redundanzgrad K ist "N-1", "N-2", oder ein beliebiges "N-n", abhängig von der Implementierung des PS. Somit lässt sich eine einfache oder mehrfache redundante Datenübertragung über disjunkte Kanäle sicherstellen.
5. Signierung SIG der Teilsequenzen TS oder eines jeweiligen Hashwertes mit einem PQC-SIG Algorithmus (SIG = Signature) zur Vergewisserung des die Teilsequenzen empfangenden NRN bezüglich der Authentizität des Senders (RGN).
6. Versendung der N Teilsequenzen und Signaturen SIG über die N disjunkten Netzwerkpfade (Channels C) vom Sender (RGN) zum Empfänger (NRN).
7. Der NRN empfängt die Nachrichten und überprüft (Check) die Signaturen SIG des RGN.
8. Sobald K der N Teilsequenzen beim NRN eingetroffen sind, rekonstruiert der NRN aus diesen die verschlüsselte geheime Zufallszahl. Die übrigen Nachrichten werden verworfen.
9. Nach ihrer Entschlüsselung steht die rekonstruierte Zufallszahl zur weiteren Verwendung beim NRN, nämlich zur lokalen Erzeugung eines Nutzschlüssels unter Anwendung einer KDF und gegebenenfalls (optional) Verknüpfung mit einem PSK zur Verfügung. Dieser und weitere durch den NRN erzeugte Nutzschlüssel stehen für verschiedene Anwendungen zur Verfügung.

Ein Angreifer müsste die Kontrolle über K disjunkte Netzwerkverbindungen zwischen RGN und NRN erhalten, um die geheime Zufallszahl ausspionieren zu können. Aufgrund der intrinsischen Sicherheit der Netzwerkverbindungen der Glasfaser-, Mobilfunk- und Satellitenkommunikationssysteme ist dieser Fall aber beliebig unwahrscheinlich.

In beiden Abläufen gemäß den Fig. 1 und 2 ist durch eine gestrichelte Darstellung entsprechender Teile des Schemas die Möglichkeit angedeutet, dass auch der RGN selbst aus einer von ihm erzeugten Zufallszahl durch Anwendung einer KDF (und optional eines PSK) Nutzschlüssel zur späteren verschlüsselten Kommunikation mit dem NRN erzeugt. Auch kann ein Nutzschlüssel durch den NRN (und gegebenenfalls den RGN) jeweils aus mehren Zufallszahlen durch Anwendung einer KDF oder/und eines PSK erzeugt werden. Hierbei werden alle der Erzeugung eines Nutzschlüssels dienende Zahlen gemäß einem der Schemata der Fig. 1 und 2 erzeugt und jeweils in Form durch Anwendung eines polynomialen Schemas PS gebildeter Teilsequenzen an den mindestens einen NRN übertragen. Dabei können die Abläufe gemäß den Fig. 1 und 2 bezogen auf die einzelnen der mehreren zur Erzeugung eines Nutzschlüssel vorgesehenen Zufallszahlen auch gemischt angewendet werden.

### B. Verwendung unterschiedlicher kryptographischer Verfahren (QKD, PQC)

Die Sicherheit des Verfahrens wird verbessert, indem für die Erzeugung eines Nutzschlüssels mehrere Zufallszahlen und unterschiedliche Verschlüsselungsverfahren zur Verwendung kommen. Es werden dazu
1. N Zufallszahlen durch einen QRNG des RGN generiert. Pro nutzbarem Netzwerkpfad wird eine Zufallszahl erzeugt.
2. Die Zufallszahlen "RNDᵢ", i = 1,... ,n werden mit unterschiedlichen Verschlüsselungsverfahren verschlüsselt. Diese Verschlüsselungsverfahren sind:
   a. durch das NIST in der Standardisierung befindliche PQC-Verschlüsselungsverfahren (Key Encapsulation Algorithmen), wie Kyber oder McEliece,
   b. symmetrische Verschlüsselung (AES, ChaCha) mit einem durch eine QKD-Strecke ausgetauschten kryptographischen Schlüssel,
   c. eine Zufallszahl RNDᵢ, die per Wiretap-Code eines "Physical Layer Security" (PLS) Verfahrens gesichert ausgetauscht wurde,
   d. eine Verschlüsselung von Zufallszahlen mithilfe eines vorverteilten Geheimnisses (Pre-Shared Secret, PSK).
3. Die verschlüsselten Zufallszahlen werden dann entsprechend des grundlegenden Verfahrensansatzes behandelt, das heißt aus jeder der verschlüsselten Zufallszahlen werden mithilfe des PS Teilsequenzen gebildet und mit einer Signatur des RGN versehen über disjunkte Netzwerkpfade versendet. Die Authentifizierung und Validierung der Teilnachrichten erfolgen dabei wie beschrieben.

Ein Angreifer müsste in diesem Fall neben der Kontrolle über K Netzwerkstrecken zusätzlich auch noch in der Lage sein, die verschiedenen Verschlüsselungsverfahren erfolgreich angreifen zu können. Die Sicherheit des nun redundanten hybriden Schlüsselaustauschverfahrens ist noch einmal deutlich erhöht.

Nachdem der NRN die verschlüsselten Zufallszahlen nach Empfang von K Teilnachrichten über die disjunkten Netzwerkpfade rekonstruieren konnte, überprüft er die Authentizität des Senders (RGN) und entschlüsselt die Zufallszahlen. Die verschiedenen Zufallszahlen werden alsdann robust kombiniert, das heißt sie werden unter Anwendung einer standardisierten Key Derivation Funktion (KDF) zu einem finalen Schlüssel, dem Nutzschlüssel zusammengefügt. Der Nutzschlüssel, so lässt sich beweisen, ist so lange sicher, solange mindestens eines der verwendeten Verschlüsselungsverfahren nicht erfolgreich angreifbar ist. Die je nach verwendeten Verschlüsselungsverfahren notwendigen Schlüssel, seien es symmetrische, private oder öffentliche Schlüssel, müssen a priori konfiguriert und verteilt werden.

### C. Verwendung verschiedener PQC-Tunnel, die mittels unterschiedlicher PQC-KEM-Algorithmen verschlüsselt werden (hier dargestellt unter der Annahme, dass auch der RGN Nutzschlüssel zur späteren kryptographisch gesicherten Kommunikation mit dem/einem RGN erzeugt)

Kommunikationsstrecken lassen sich mithilfe von PQC-VPN-Tunnelverbindungen quantensicher absichern. Dazu wird die digitale Kommunikation zwischen zwei authentifizierten Endpunkten quantensicher verschlüsselt übertragen. Über jeden der verfügbaren Netzwerkpfade wird nun ein PQC-VPN-Tunnel, der jeweils unterschiedliche PQC-KEM Algorithmen verwendet, aufgespannt. Die Authentifizierung der Endpunkte (RGN und NRN) erfolgt wiederum durch unterschiedliche PQC-SIG Algorithmen.

Nun werden Zufallszahlen an einem Endpunkt des Netzwerks, nämlich bei dem RGN mithilfe eines QRNGs generiert und gegebenenfalls statistisch validiert sowie mittels eines PQC-KEM-Algorithmus verschlüsselt. Die verschlüsselten Artefakte werden dann mithilfe des polynomialen Schemas PS (wie das Secret Sharing Scheme nach Shamir) in verschiedene Teilsequenzen (Teilbotschaften) aufgeteilt, wobei die Anzahl dieser Teilsequenzen der Anzahl der disjunkten Netzwerkpfade entspricht. Die Redundanz der Teilsequenzen (Teilbotschaften), also der Wert K des angewendeten PS, ist ein frei zu wählender Parameter und wird durch die Art Implementierung des polynomialen Schema PS und des dabei verwendeten Polynoms bestimmt. Schließlich werden die Teilsequenzen oder ein Hash mithilfe eines PQC-SIG Algorithmus signiert, um die Authentifizierbarkeit des Senders, das heißt des RGN, zu gewährleisten. Die signierten Teilsequenzen werden dann über die verschiedenen PQC-VPN-Tunnel über disjunkte physikalische Netzwerkpfade versendet.

Der Empfänger, das heißt der NRN, erhält die Teilsequenzen, die über disjunkte physikalische Netzwerkpfade und über PQC-VPN-Tunnel gesichert versendet wurden. Er überprüft die Signatur der Teilsequenzen (Teilbotschaften), um die Authentizität des Senders (RGN) verifizieren zu können. Danach fügt er aus den Teilsequenzen die übermittelten Nachrichten, das heißt die jeweilige Zufallszahl oder die jeweiligen Zufallszahlen zusammen. Redundante Nachrichten, das heißt nicht mehr benötigte Teilsequenzen werden dabei verworfen. Die mindestens eine Zufallszahl wird danach von dem Empfänger (NRN) entschlüsselt. Werden mehrere Zufallszahlen zur Erzeugung eines Nutzschlüssels verwendet, werden diese im Wege einer robusten Kombination mithilfe einer KDF (Key Derivation Funktion) zu dem finalen kryptographischen Schlüssel, das heißt dem Nutzschlüssel, zusammengefügt.

Der Sender und der Empfänger sind im Besitz derselben mindestens einen Zufallszahl, die dreifach kryptographisch gesichert zuvor über das Netzwerk übertragen wurde. Die drei Faktoren sind:
- PQC-Verschlüsselung und Authentifizierung über einen VPN-Tunnel, wobei unterschiedliche Algorithmen auf unterschiedlichen disjunkten physikalischen Pfaden zu Anwendung kommen,
- Verschlüsselung (PQC, AES, ChaCha, Hash, PLS) der Zufallszahl,
- Secret Sharing durch Anwendung des polynomialen Schemas PS und Versendung der Teilsequenzen (Teilbotschaften).

Es werden also drei disjunkte kryptographische Methoden mit physikalischer Pfaddiversifizierung gekoppelt, um eine quantensichere Informationsübertragung zu gewährleisen. Ein Angreifer müsste demnach in der Lage sein:
- die K disjunkten Netzwerkpfade abzuhorchen und alle verwendeten PQC-KEM und SIG-Algorithmen zu brechen,
- die K Teilsequenzen (Teilbotschaften) aus dem Datenstrom zu erlangen, um die mithilfe des PS geteilten Information zusammenfügen zu können,
- nach dem Zusammenfügen der Teilsequenzen (Teilbotschaften) eine symmetrische oder nochmalige PQC-Verschlüsselung zu brechen,
- und dann in der Lage sein, alle entschlüsselten Zufallszahlen richtig robust zu kombinieren, um den finalen kryptographischen Schlüssel zu berechnen.

Unter praktischen Gesichtspunkten ist dies im Grunde eine Unmöglichkeit.

Sofern der Sender (RGN) und der Empfänger (NRN), wie in dem zuvor erläuterten beispielhaften Ablauf, gemeinsam identische Nutzschlüssel zur symmetrischen verschlüsselten Kommunikation untereinander verwenden wollen, kann der RGN diese Nutzschlüssel seinerseits unter Anwendung derselben auch durch den NRN verwendeten KDF lokal erzeugen.

Alternativ besteht die Möglichkeit, dass der RGN die von ihm generierten Zufallszahlen selbst nicht nutzt, sondern nach Art eines "Key as a Service" die Zufallszahlen und somit Entropie an mehrere hieraus jeweils lokal Nutzschlüssel erzeugende NRN verteilt.

Die Verteilung von Zufallszahlen kann dabei ebenfalls bezüglich jedes der sie empfangenden NRN über disjunkte Netzwerkpfade erfolgen. Ein "Key as a Service" Dienst, das heißt die Erzeugung validierter und signierter Zufallszahlen und deren Versendung an beliebige Verbraucher (NRN) könnte ein zukünftiges Geschäftsmodell werden, bei dem räumlich verteilter Zufall ein Enabler für sichere, resiliente und performante Netzwerke wird. Aber es lassen sich auch Zufallszahlen zur unmittelbaren Verwendung als kryptographische Schlüssel in dieser Weise verteilen.

Eine Zufallszahlenquelle, das heißt ein QRNG (Quantenzufallszahlengenerator), der in einer Cloud-Infrastruktur, in Satelliten, in mobilen Telefonen oder in beliebigen Computern seine Arbeit verrichtet, schickt Zufallszahlen an beliebige Konsumenten (NRN) über disjunkte Netzwerkpfade. Die Übermittlung der Zufallszahlen erfolgt dabei entsprechend dem grundlegenden Verfahren, verteilt und gesichert über mehrere Teilnetze. Diese Verteilung ermöglicht die Geheimhaltung der versendeten Zufallszahlen. Die Empfänger sind in der Lage aus den empfangenen Nachrichten die erzeugten Zufallszahlen zu rekonstruieren, sofern K dieser Teilnachrichten empfangen werden, sowie daraus auf lokaler Ebene quantensichere Nutzschlüssel zu erzeugen.

Auch für die "Key as a Service" Zufallszahlen lassen sich dabei zusätzlich unterschiedliche PQC oder symmetrische Verschlüsselungen einsetzen oder es kann die Verteilung über unterschiedliche PQC-VPN-Tunnel über disjunkte Netzwerkpfade gesichert werden.

Aus den empfangenen Zufallszahlen lassen sich die folgenden Anwendungen herleiten:
- Berechnung von kryptographischen Schlüsseln für eine symmetrische Verschlüsselung von zwischen zwei Endpunkten (Netzwerkknoten) übertragenen Daten, beispielsweise auch von Zufallszahlen, welche zum Beispiel mithilfe eines bei beiden Endpunkten vorliegenden Pre-shared Secrets in identischer Weise berechnet werden.
- Nutzung der verteilten Zufallszahlen zur Anwendung von Wiretap Codes für Physical Layer Security Methoden, das heißt für das Verstecken von Information im Rauschen eines physikalischen Kanals.
- Schaffung resilienter Netzwerke durch Anwendung des räumlich verteilten Zufalls.
- Erhöhung der Kanalkapazitäten physikalischer Kanäle durch Anwendung von Reed-Solomon Codes im Rahmen von Post Shannon'schen Kommunikationsmethoden.

Das beschriebene Verfahren zeichnet sich vor allem durch die Ausfallsicherheit aus. So ist der Redundanzgrad wählbar, damit der Wegfall einer oder mehrerer Netzwerkpfade (je nach Konfiguration) ausgeglichen werden kann. Je grösser die Anzahl der disjunkten Netzwerkpfade ist, desto mehr Teilsequenzen (Teilbotschaften) der mindestens einen Zufallszahl können erzeugt werden.

Durch die Verschlüsselung der Zufallszahlen vor dem Secret Sharing, also der Anwendung des PS, lassen sich die Schlüsselbits kryptographisch sichern. Das hybride Verfahren kombiniert die Sicherheit von Secret Sharing und Kryptographie. Sollte ein Angreifer also wider Erwarten dennoch in den Besitz von K Teilsequenzen (Teilbotschaften) gelangen, die über K disjunkte Netzwerkpfade versendet wurden, so könnte der Angreifer dennoch nichts mit der rekonstruierten Information anfangen. Ungeachtet dessen ist aber die, im Hinblick auf die Übertragung der Teilsequenzen an den daraus die mindestens eine Zufallszahl rekonstruierenden sowie den Nutzschlüssel erzeugenden Netzwerkknoten NRN gegebene Redundanz sehr wichtig, insbesondere für kritische Applikationen. Ohne Nutzung der beschriebenen Vorgehensweise unter Einbeziehung des Aspekts der Redundanz wäre der gesamte Prozess viel störanfälliger und könnte beispielsweise durch DoS-Attacken (Dos = Denial of Service) auf einen Netzwerkpfad oder durch eine anderweitig verursachte Unterbrechung eines Netzwerkpfades gestoppt werden. Auch ein Jammer (Störsender) in der Nähe einer Satellitenbasisstation, eine Sabotage an einer Funkantenne und dergleichen mehr könnten den Prozess der Nutzschlüsselerzeugung zum Erliegen bringen.

Die Versendung der mindestens einen Zufallszahl durch PQC-VPN Tunnel hat nicht nur den Vorteil der Nutzung virtueller privater Netzwerke, sondern sichert die gesendete Botschaft zusätzlich durch eine weitere PQC-Verschlüsselung. Dieser Verfahrensteil addiert somit eine dritte Verschlüsselungsmethode zur Sicherung der originalen Zufallszahlen, die unter anderem selbst als kryptographische Schlüssel dienen können. PQC-VPN fügen zusätzlich noch eine quantensichere Authentifizierung der Endpunkte hinzu und vermeiden somit typische "man in the middle" Angriffe.

Operativ kann es allerdings zu Laufzeitschwankung bei der Übermittlung der Nachrichten über die disjunkten Netzwerkpfade kommen. Die temporären Latenzschwankungen der verschiedenen Netzwerkpfade können jedoch mitigiert werden, da einzelne Pfade mit besonders langer Laufzeit nicht zwingend zur Rekonstruktion der Daten benötigt werden, falls bereits genügend Teilstücke vorhanden sind. Weiterhin gilt das Secret Sharing (Aufteilen eines Geheimnisses, hier der jeweiligen Zufallszahl nach einem PS) als informationstheoretisch sicher, was eine geheime Datenübertragung ermöglicht, sofern weniger Netzwerkpfade abgehört werden als die minimale Anzahl zur Rekonstruktion benötigter Teilstücke, respektive Teilsequenzen.

Das dargestellte Verfahren lässt sich nahtlos in bestehende Schlüsselaustauscharchitekturen einfügen, wie sie im Rahmen des OpenQKD oder Euro-QCI Projekts entwickelt wurden oder werden. Die Realisierung ist vergleichsweise einfach. Ein Netzwerkprovider wäre in der Lage, mehrere disjunkte Netzwerkverbindungen innerhalb ihrer Netzwerke zu schaffen und einzusetzen, um sichere Schlüsselaustauschverbindungen zu ermöglichen - und somit eine Lösung für eine Ende-zu-Ende Hochsicherheitsplattform zu haben.

Auch lässt sich die Lösung nahtlos und kostengünstig in das Trusted-Node Konzept einer QKD-Sicherheitsplattform (Euro-QCI) einführen, um Anwendungen, die keinen quantenoptischen Endpunkt besitzen, zu integrieren. Und dies gelingt mit der dargestellten Sicherheit und zu vergleichsweise sehr geringen Kosten.

Ein Key-as-a-Service (KaaS) als Geschäftsmodell einer Hochsicherheits-Kommunikationsplattform ließe sich über die dargestellte Lösung mit dreifacher Quantensicherheit realisieren und somit auch im Zeitalter von Quantencomputern sichere digitale Kommunikation ermöglichen.

## Patentansprüche

1. Verfahren zur lokalen Erzeugung von quantensicheren Schlüsseln in einem Netzwerk, bei welchem ein jeweiliger quantensicherer Schlüssel, nämlich ein für eine quantenkryptographisch gesicherte Kommunikation verwendbarer Nutzschlüssel, in zumindest einem, von mehreren über das Netzwerk miteinander verbundenen Netzwerknoten lokal erzeugt wird, durch Anwendung einer Key Derivation Function KDF auf mindestens eine Zufallszahl oder/und durch deren Verknüpfung mit einem Pre-shared Secret, das heißt mit einem vorverteilten Geheimnis, wobei diese mindestes eine Zufallszahl dem vorgenannten, mindestens einen, Schlüssel erzeugenden Netzwerkknoten NRN durch einen der anderen, mithilfe quantenmechanischer Mittel lokal Zufallszahlen generierenden Netzwerkknoten RGN über das Netzwerk zur Verfügung gestellt wird, **dadurch gekennzeichnet, dass** eine jeweilige Zufallszahl durch den mindestens einen Netzwerkknoten NRN in Form mehrerer Teilsequenzen, nämlich als eine Anzahl von Teilsequenzen empfangen wird, welche von dem Netzwerkknoten RGN nach einem diese durch ihn generierte Zufallszahl umfassenden und deren spätere Rekonstruktion ermöglichenden polynomialen Schema PS gebildet und an den Netzwerkknoten NRN über dieselbe Anzahl vollständig disjunkter Netzwerkpfade redundant übertragen werden, wobei jede Teilsequenz der Zufallszahl über einen anderen der disjunkten Netzwerkpfade übertragen wird.

2. Verfahren nach Anspruch 1, **dadurch gekennzeichnet, dass** die Teilsequenzen der mindestens einen Zufallszahl über mehrere disjunkte, unterschiedliche Übertragungsverfahren und/oder Übertragungsmedien verwendende Teilnetze des Netzwerks von dem Netzwerkknoten RGN an den mindestens einen Netzwerkknoten NRN übertragen werden.

3. Verfahren nach Anspruch 1 oder 2, **dadurch gekennzeichnet, dass** die mindestens eine, dem mindestens Netzwerkknoten NRN zur Erzeugung eines Nutzschlüssels zur Verfügung gestellte Zahl in dem Netzwerkknoten RGN durch einen Quantum Random Number Generator QRNG, das heißt durch einen Zufallszahlen hoher Entropie mithilfe quantenmechanischer Mittel erzeugenden Zufallszahlengenerator generiert werden.

4. Verfahren nach einem der Ansprüche 1 bis 3, **dadurch gekennzeichnet, dass** die jeweiligen Zufallszahlen vor der mittels des polynomialen Schemas PS erfolgenden Erzeugung der ihrer Übertragung über disjunkte Netzwerkpfade dienenden Teilsequenzen durch mindestens eine dafür ausgebildete Einrichtung des sie generierenden Netzwerkknotens RGN hinsichtlich der Qualität ihrer Entropie validiert werden.

5. Verfahren nach einem der Ansprüche 1 bis 4, **dadurch gekennzeichnet, dass** die aus der mindestens einen Zufallszahl mittels des polynomialen Schemas PS gebildeten Teilsequenzen zwischen dem Netzwerkknoten RGN und dem mindestens einen Netzwerkknoten NRN verschlüsselt und jeweils zusammen mit einer mittels eines privaten Schlüssels des Netzwerkknotens RGN gebildeten Signatur übertragen werden, welche es dem mindestens einen Netzwerkknoten NRN durch Anwendung des komplementären öffentlichen Schlüssels des Netzwerkknotens RGN ermöglicht, den die Teilsequenzen aussendenden Netzwercknoten RGN zu authentifizieren, wobei eine jeweilige Teilsequenz oder ein aus ihr gebildeter Hashwert durch den Netzwerkknoten RGN mit seinem privaten Schlüssel signiert wird.

6. Verfahren nach Anspruch 5, **dadurch gekennzeichnet, dass** zur Verschlüsselung der Teilsequenzen bei ihrer Übertragung über die disjunkten Netzwerkpfade unterschiedliche Verschlüsselungsverfahren eingesetzt werden.

7. Verfahren nach Ansprüche 6, **dadurch gekennzeichnet, dass** zur Verschlüsselung der Teilsequenzen bei ihrer Übertragung über die disjunkten Netzwerkpfade mindestens zwei unterschiedliche KEM-PQC-Verschlüsselungsverfahren eingesetzt werden.

8. Verfahren nach einem der Ansprüche 1 bis 7, **dadurch gekennzeichnet, dass** die mindestens eine Zufallszahl vor der Bildung der der Teilsequenzen verschlüsselt und in dem mindestens einen sie empfangenden Netzwerkknoten NRN vor ihrer Verwendung zur Erzeugung des Nutzschlüssels wieder entschlüsselt wird.

9. Verfahren nach einem der Ansprüche 5 bis 8, **dadurch gekennzeichnet, dass** die Verschlüsselung der mindestens einen Zufallszahl und/oder der aus ihr für ihre Übertragung an den mindestens einen Netzwerkknoten NRN gebildeten Teilsequenzen entsprechend mindestens einer der nachfolgenden Methoden erfolgt:
- nach einem Key-Encapsulation-Mechanismus KEM unter Nutzung eines PQC-Verschlüsselungsverfahrens;
- durch symmetrische Verschlüsselung mit einem über einen mittels Quantum Key Distribution QKD gesicherten Kanal ausgetauschten kryptographischen Schlüssel;
- durch symmetrische Verschlüsselung mit einer Zufallszahl, die unter Verwendung eines Wiretap-Codes nach einem Verfahren der Physical Layer Security PLS zwischen dem mindestens einem den Nutzschlüssel erzeugenden Netzwerkknoten und dem mindestens einen mit quantenmechanischen Mitteln ausgestatteten Netzwerkknoten ausgetauscht wird;
- durch symmetrische Verschlüsselung mit einem Pre-Shared Secret PSK, nämlich einem gemeinsamen, an den mindestens einen den Nutzschlüssel erzeugenden Netzwerkknoten NRN und den mindestens einen mit quantenmechanischen Mitteln ausgestatteten Netzwerkknoten RGN vorverteilten Geheimnis.

10. Verfahren nach einem der Ansprüche 1 bis 9, **dadurch gekennzeichnet, dass** der Nutzschlüssel durch den mindestens einen Netzwerkknoten NRN aus mehreren Zufallszahlen durch Kombination dieser Zufallszahlen unter Anwendung der KDF oder/und durch Verknüpfung mit einem Pre-shared Secret erzeugt wird.

11. Verfahren nach einem der Ansprüche 1 bis 10, **dadurch gekennzeichnet, dass** Teilsequenzen der mindestens einen Zufallszahl über mindestens einen der disjunkten Netzwerkpfade unter Nutzung eines durch einen PQC-KEM-Algorithmus gesicherten VPN-Tunnels übertragen werden.

12. Verfahren nach Anspruch nach Anspruch 12, wobei Teilsequenzen der mindestens einen Zufallszahl in jedem der disjunkten Netzwerkpfade unter Nutzung eines durch einen PQC-KEM-Algorithmus gesicherten VPN-Tunnels übertragen werden, **dadurch gekennzeichnet, dass** in den einzelnen der disjunkten Netzwerkpfade voneinander verschiedene PQC-KEM-Algorithmen zur Sicherung des jeweiligen VPN-Tunnels verwendet werden.

13. Verfahren nach einem der Ansprüche 1 bis 12, **dadurch gekennzeichnet, dass** der die mindestens eine Zufallszahl lokal generierende Netzwerkknoten RGN seinerseits in gleicher Weise wie der mindestens eine Netzwerkknoten NRN durch Anwendung einer Key Derivation Function KDF auf die mindestens eine Zufallszahl oder/und durch deren Verknüpfung mit einem Pre-shared Secret PSK lokal einen Nutzschlüssel erzeugt, welcher mit dem bei dem mindestens einen Netzwerkknoten NRN erzeugten Nutzschlüssel identisch ist und von dem Netzwerkknoten RGN sowie von dem mindestens einen Netzwerkknoten NRN später zur Absicherung einer zwischen ihnen erfolgenden Kommunikation verwendet wird.

14. Verfahren nach einem der Ansprüche 1 bis 12, **dadurch gekennzeichnet, dass** der die mindestens eine Zufallszahl generierende Netzwerkknoten RGN die Anzahl der zu der mindestens einen Zufallszahl mittels des polynomialen Schemas PS erzeugten Teilsequenzen über jeweils dieselbe Anzahl disjunkter Netzwerkpfade an mindestens zwei Netzwerkknoten NRN überträgt, welche daraus lokal einen identischen Nutzschlüssel erzeugen, den die mindestens zwei Netzwerkknoten NRN später zur Absicherung einer zwischen ihnen erfolgenden Kommunikation verwenden.
